# EUROPEAN PATENT APPLICATION

(11) **EP 3 089 115 A1**
(43) Date of publication of application: **02.11.2016**
(21) Application number: 16167337.1
(22) Date of filing: 27.04.2016
(51) Int. Cl.: G07C 5/00, G07C 5/08, B64D 45/00

(54) **AIRCRAFT OPERATIONAL ANOMALY DETECTION**

(30) Priority: 29.04.2015 US 201562154275 P
(71) Applicant: Rosemount Aerospace Inc., Burnsville MN 55306-4898 (US)
(72) Inventor: HAUKOM, Michael James, Farmington, MN 55024 (US)
(74) Representative: Bridge, Kerry Ann

(57) **Abstract**

An example method includes receiving, by an aircraft interface device (12) installed on an aircraft (14), data corresponding to operational characteristics of the aircraft (14), and determining, by the aircraft interface device (12), whether the data corresponding to the operational characteristics of the aircraft (14) indicates that an aircraft anomaly condition is present. The method further includes storing, by the aircraft interface device (12), selected data corresponding to the operational characteristics of the aircraft (14) at a first storage frequency in response to determining that the aircraft anomaly condition is not present, and storing, by the aircraft interface device (12), the selected data corresponding to the operational characteristics of the aircraft (14) at a second storage frequency that is greater than the first storage frequency in response to determining that the aircraft anomaly condition is present.

## Description

### BACKGROUND

The present disclosure relates generally to aircraft operational anomaly detection, and in particular to data storage and transmission techniques responsive to a detected aircraft operational anomaly condition.

Many modern aircraft utilize data acquisition systems that collect data from various sensors and computing devices positioned throughout the aircraft. Such data acquisition systems can serve as centralized collection points for aircraft operational data that can be routed to and from various producing and consuming systems, such as flight management systems, automatic flight control systems, environmental control systems, flight displays, and the like.

Collected operational data can be stored, such as at maintenance computers located within the aircraft, to facilitate post-flight fault identification and/or incident root-cause analysis. For example, anomalies associated with system or component malfunctions can be diagnosed post-flight by maintenance personnel or other technicians using data retrieved from the maintenance computers or other reporting systems. Similarly, selected portions of the data are often transmitted to an on-board flight data recorder device that preserves (i.e., stores) the aircraft operational data for later retrieval to facilitate the investigation of aircraft incidents. Indeed, flight data recorders can be highly beneficial, once located, to the investigation of those incidents where the aircraft is lost. Once the aircraft is located, incident responders can remove the flight data recorder and retrieve the stored data, including the most recent aircraft operational data that precedes the incident.

Aircraft location is typically tracked via a series of geographically disparate radar stations. However, such location tracking can be difficult when aircraft fly through areas that are not covered by primary or secondary radar systems, such as during certain oceanic flights. Aircraft location in such areas is typically tracked via open loop position reports communicated via, e.g., Aircraft Communications Addressing and Reporting System (ACARS) and/or Satellite Communications (SATCOM) messaging systems. In an effort to reduce the sometimes significant cost of ACARS and SATCOM message transmissions, such location reports can be infrequent, often separated by as much as thirty minutes. This relatively low frequency of location reports can result in as much as six hundred nautical miles between reporting locations, thereby possibly resulting in an expansive search area in the event that an aircraft is lost.

### SUMMARY

In one example, a method includes receiving, by an aircraft interface device installed on an aircraft, data corresponding to operational characteristics of the aircraft, and determining, by the aircraft interface device, whether the data corresponding to the operational characteristics of the aircraft indicates that an aircraft anomaly condition is present. The method further includes storing, by the aircraft interface device, selected data corresponding to the operational characteristics of the aircraft at a first storage frequency in response to determining that the aircraft anomaly condition is not present, and storing, by the aircraft interface device, the selected data corresponding to the operational characteristics of the aircraft at a second storage frequency that is greater than the first storage frequency in response to determining that the aircraft anomaly condition is present.

In another example, an aircraft interface device configured to be installed on an aircraft includes at least one processor, a communications unit, and computer-readable memory. The communications unit is operatively coupled to the at least one processor and is configured to receive data corresponding to operational characteristics of the aircraft. The computer-readable memory is encoded with instructions that, when executed by the at least one processor, cause the aircraft interface device to determine whether the data corresponding to the operational characteristics of the aircraft indicates that an aircraft anomaly condition is present. The computer-readable memory is further encoded with instructions that, when executed by the at least one processor, cause the aircraft interface device to store selected data corresponding to the operational characteristics of the aircraft at a first storage frequency in response to determining that the aircraft anomaly condition is not present, and store the selected data corresponding to the operational characteristics of the aircraft at a second storage frequency that is greater than the first storage frequency in response to determining that the aircraft anomaly condition is present.

The aircraft flight performance data of the aircraft interface device may comprise aircraft track information indicating a flight direction of the aircraft at a current geographical location of the aircraft; and the instructions to compare the aircraft flight performance data to the expected aircraft flight performance data may comprise instructions that, when executed by the at least one processor, cause the aircraft interface device to compare the aircraft track information to a route plan of the aircraft indicating an expected flight direction of the aircraft at the current geographical location of the aircraft.

The aircraft flight performance data may comprise aircraft vertical speed information; and the instructions to compare the aircraft flight performance data to the expected aircraft flight performance data may comprise instructions that, when executed by the at least one processor, cause the aircraft interface device to compare the aircraft vertical speed to a threshold vertical speed.

The instructions to store the selected data corresponding to the operational characteristics of the aircraft may comprise instructions that, when executed by the at least one processor, cause the aircraft interface device to transmit the selected data to a flight data recorder device that is installed on the aircraft and is configured to store the selected data.

The selected data corresponding to the operational characteristics of the aircraft may comprise location data indicating a current geographical location of the aircraft.

The communications unit may further be configured to transmit data; and the computer-readable memory may further be encoded with instructions that, when executed by the at least one processor, cause the aircraft interface device to transmit, via the communications unit, the selected data corresponding to the operational characteristics over a communications network.

### BRIEF DESCRIPTION OF THE DRAWINGS

FIG. 1 is a block diagram illustrating an example data acquisition system including an aircraft interface device that can determine whether an aircraft anomaly condition is present.
FIG. 2 is a block diagram illustrating an example aircraft interface device that can determine whether an aircraft anomaly condition is present.
FIG. 3 is a flow diagram illustrating example operations to store aircraft operational data at a frequency corresponding to the presence of a determined aircraft anomaly condition.

### DETAILED DESCRIPTION

According to techniques of this disclosure, an aircraft interface device installed on an aircraft can determine, based on received data corresponding to operational characteristics of the aircraft, whether the data indicates that an aircraft anomaly condition is present. Such anomalies can include, e.g., course or flight plan deviation, erratic flight, rapid decompression, unplanned and/or sudden rates of climb or descent, or other such anomalies that can indicate the compromised function or even possible hijack of the aircraft. In response to determining that an anomaly condition is present, the aircraft interface device can initiate an increased frequency of data storage and/or data transmission (e.g., via ACARS, SATCOM, or both) associated with the aircraft operational data, such as location data, performance data, or other such data. In this way, an aircraft interface device implementing techniques of this disclosure can initiate a higher frequency of data storage and, in certain cases, storage of a higher fidelity of data during anomalous flight conditions without overburdening processing bandwidth or data storage capabilities during non-anomalous (e.g., expected) flight conditions. Moreover, the aircraft interface device can initiate a higher frequency of data transmission (e.g., aircraft location data) during anomalous flight conditions, thereby helping to decrease a distance between location reports during such anomalies without increasing the rate of transmission and associated cost during non-anomalous flight conditions. As such, techniques described herein can facilitate maintenance activities associated with systems and/or components of an aircraft as well as provide an increased frequency of location reporting during anomalous flight conditions.

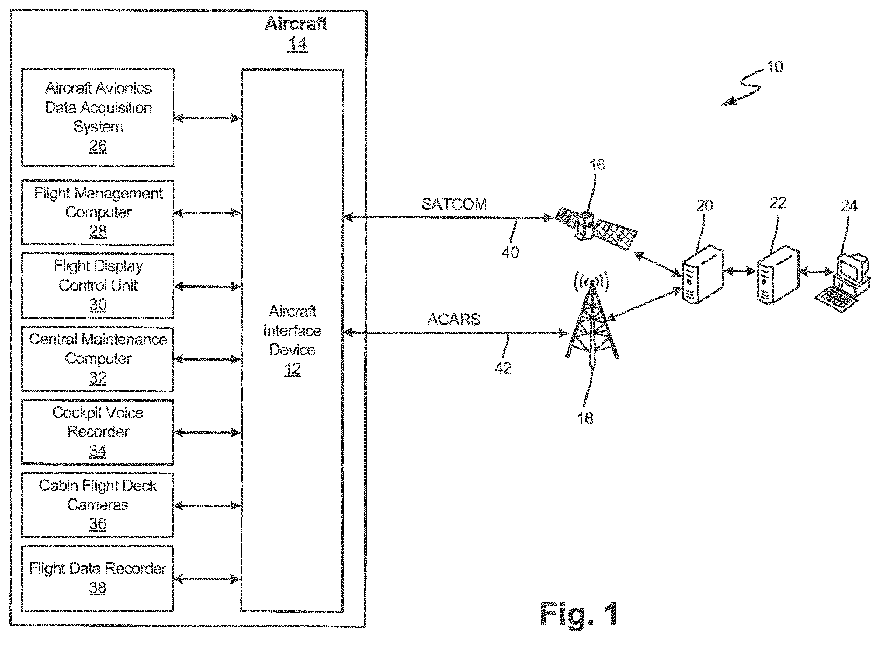

FIG. 1 is a block diagram illustrating example data acquisition system 10 including aircraft interface device 12 that can determine whether an aircraft anomaly condition is present. As illustrated in FIG. 1, data acquisition system 10 can include aircraft 14, satellite communication (SATCOM) network 16, radio communications network 18, ground server 20, web server 22, and ground tracking station 24. Aircraft 14 can include aircraft avionics data acquisition system 26, flight management computer 28, flight display control unit 30, central maintenance computer 32, cockpit voice recorder 34, cabin flight deck cameras 36, and flight data recorder 38.

Aircraft 14 can be any commercial, civil, and/or military manned or unmanned aerial vehicle. For instance, in some examples, aircraft 14 can be a commercial (e.g., manned) aircraft configured to carry passengers and/or cargo. In other examples, aircraft 14 can be an unmanned aerial vehicle, often referred to as a "drone," that is adapted for autonomous and/or remotely piloted flight. As illustrated in FIG. 1, aircraft 14 can include a plurality of systems and subsystems that group functionally-related components, such as computing devices, actuators, valves, sensors, or other components. As such, while illustrated as including aircraft interface device 12 that is communicatively coupled with components 26, 28, 30, 32, 34, 36, and 38, it should be understood that aircraft 14 can include more or fewer than components 26, 28, 30, 32, 34, 36, and 38. For instance, aircraft 14 can include one or more antennas and aircraft communication units (not illustrated) configured to modulate and/or demodulate signals for data transmission via one or more communications networks, such as cellular networks, wireless internet (e.g., WiFi) networks, radio communications networks, satellite communications networks, or other communications networks. As in the example of FIG. 1, aircraft 14 can include one or more communications units that communicate with aircraft interface device 12 to send and receive SATCOM messages 40 and ACARS messages 42, as is further described below. Similarly, aircraft interface device 12 can be communicatively coupled with any one or more of components 26, 28, 30, 32, 34, 36, and 38, as well as with other components.

Aircraft interface device 12 can include any one or more of interface circuitry, processors, computer-readable memory, or other components configured to send and receive aircraft operational data and store and/or transmit selected data at a frequency corresponding to the presence of a determined aircraft anomaly condition, as is further described below. Aircraft avionics data acquisition system 26 includes processing and interface circuitry configured to receive discrete, analog, and/or digital data parameters from sensors and avionics systems and route the signals to one or more consuming systems within aircraft 14. For instance, aircraft avionics data acquisition system 26 can be a digital flight data acquisition unit (DFDAU) that acquires data from the various sensors and systems, routes data to one or more systems of aircraft 14, and records portions of the data via an integrated aircraft condition monitoring system (ACMS).

Flight management computer (FMC) 28 can include processing and interface circuitry to receive inputs from a user interface device, such as a control display unit (CDU) and one or more systems of aircraft 14 to determine, manage (e.g., automate), and output flight plan or other operational parameters of aircraft 14 to, e.g., an automatic flight control system (AFCS), electronic flight instrument system (EFIS), navigation display (ND), or multifunction display (MFD). For example, FMC 28 can determine, based on received user (e.g., pilot) input and/or stored navigational information, a flight plan that specifies a route and altitude through a plurality of waypoints, such as physical waypoints corresponding to a location of very high frequency (VHF) omnidirectional radio (VOR) navigational radio stations, virtual waypoints determined by FMC 28, or other waypoints between a takeoff location and a destination location. FMC 28 can determine expected and/or actual aircraft operational data corresponding to the flight plan, such as an expected amount of fuel, an expected ground and/or airspeed speed, an expected time of arrival (e.g., at waypoints, at a location between waypoints, at a destination, or other locations), and aircraft location information (e.g., via global positioning system (GPS) inputs, VOR inputs, inertial reference system (IRS) inputs, attitude heading and reference system (AHARS) inputs, distance measuring equipment (DME) inputs, or other location information inputs). FMC 28 can implement one or more navigational control algorithms to provide navigational outputs to, e.g., an AFCS based on the determined flight plan and current location information, such as lateral navigation (LNAV) and/or vertical navigation (VNAV) control outputs.

Flight display control unit (FDCU) 30 can include processing and interface circuitry to output aircraft operational and performance data to one or more consuming displays of aircraft 14, such as a primary flight display (PFD), a MFD, an engine indicating and crew alerting system (EICAS) display, or other displays included in e.g., an EFIS of aircraft 14. Central maintenance computer 32 can include processing and interface circuitry to receive aircraft operational data and store, determine, and/or produce reports corresponding to fault and general maintenance information of components or systems of aircraft 14.

Cockpit voice recorder (CVR) 34 can include and/or be connected to microphones and other processing and interface circuitry configured to record sounds within the cockpit of aircraft 14 during, e.g., aircraft flight anomalies. For instance, CVR 34 can automatically record (e.g., continuously record via a circular buffer) a most recent history of cockpit sounds, such as pilot voices or other such sounds. Cabin flight deck cameras 36 can record, e.g., continuously, a most recent history of video images within the cabin of aircraft 14.

Flight data recorder (FDR) 38 can include processing and interface circuitry and non-volatile computer-readable memory to receive and store aircraft operational data for later retrieval, such as to facilitate the investigation of aircraft incidents. In some examples, FDR 38 and CVR 34 can be integrated into a single unit.

As illustrated in FIG. 1, aircraft interface device 12 can be connected (e.g., communicatively, operatively, and/or electrically connected) to each of aircraft avionics data acquisition system 26, FMC 28, FDCU 30, CMC 32, CVR 34, cabin flight deck cameras 36, and FDR 38, as well as to other components and systems of aircraft 14. Such connections can take the form of any one or more physical transmission media and/or communication protocols, such as discrete electrical pin connections, Ethernet connections, serial data connections such as RS-422 connections, RS-485 connections, ARINC 429 connections, ARINC 717 connections, universal serial bus (USB) connections, or other such connections. In some examples, any one or more of the communications connections can be wireless connections, such as WiFi connections, Bluetooth connections, cellular connections, or other types of wireless connections. While illustrated for purposes of clarity and ease of discussion as including multiple connections between aircraft interface device 12 and each of aircraft avionics data acquisition system 26, FMC 28, FDCU 30, CMC 32, CVR 34, cabin flight deck cameras 36, and FDR 38, in some examples, one or more of the communications connections can be accomplished via a common communications bus.

As illustrated in FIG. 1, aircraft interface device 12 can send and receive data via one or more communications networks, such as SATCOM network 16 and radio communications network 18. SATCOM network 16 can utilize a series of communications satellites to route data from a transmitting antenna (e.g., an antenna of aircraft 14) via the series of satellites. Radio communications network 18 can utilize a series of high frequency (HF) or VHF radio towers to route data from a transmitting antenna (e.g., an antenna of aircraft 14). A receiving antenna, such as an antenna included with or operatively coupled to ground server 20, can receive the transmitted data. Such data can include message data (e.g., according to the ACARS messaging protocol) or other such data. Ground server 20 can be any device capable of receiving data from aircraft 14 via SATCOM network 40, radio communications network 42, or other communications networks and transmitting the data to a remote computing device, such as web server 22. In certain examples, ground server 20 is owned and/or operated by a communications service provider that receives SATCOM and/or ACARS messages and charges (e.g., monetarily charges) for access to the received data. Web server 22, for example, can execute one or more applications that retrieve SATCOM and/or ACARS message data from ground server 20 and presents (e.g., serves) the data to ground tracking station 24. Examples of any one or more of ground server 20, web server 22, and ground tracking station 24 can include, but are not limited to, server devices, mainframe computers, desktop computers, laptop computers, tablet computers, mobile phones (including smartphones), personal digital assistants (PDAs), or other computing devices.

In operation, aircraft interface device 12 can receive data corresponding to operational characteristics of aircraft 14 from one or more systems and components of aircraft 14, such as aircraft avionics data acquisition system 26, FMC 28, FDCU 30, CMC 32, CVR 34, cabin flight deck cameras 36, and FDR 38. Aircraft interface device 12 can determine whether the data corresponding to the operational characteristics of aircraft 14 indicates that an aircraft anomaly condition associated with aircraft 14 is present. An aircraft anomaly condition can include any condition indicative of abnormal (e.g., unexpected) operation of aircraft 14 or any one or more components of aircraft 14. For instance, aircraft anomalies can include indications of course or flight plan deviation, erratic flight (e.g., flight conditions approaching a boundary of a flight envelope of aircraft 14), rapid decompression, unplanned and/or sudden rates of climb or descent, indications of a malfunction of a component of aircraft 14, or other such anomalies.

Aircraft interface device 12 can determine that an aircraft anomaly condition is present in response to determining that the data corresponding to the aircraft operational characteristics satisfies threshold anomaly criteria. Threshold anomaly criteria can specify, in certain examples, a deviation from expected operational data. In some examples, the threshold anomaly criteria can be predetermined criteria, such as a predetermined threshold deviation from baseline expected data. In other examples, the threshold anomaly criteria can be configurable, such as via a user interface operatively connected to aircraft interface device 12. For instance, in some examples, a technician can specify anomaly criteria, such as threshold airspeed, altitude, course deviation, or operational state of any component of aircraft 14. In this way, aircraft interface device 12 can enable customizable anomaly criteria that can be useful, e.g., for failure analysis of aircraft components.

The data corresponding to the operational characteristics of aircraft 14 can include aircraft flight performance data indicative of current, historical, or predicted flight characteristics of aircraft 14. Examples of aircraft flight performance data can include, but are not limited to, aircraft track information indicating a flight direction of aircraft 14 at a current geographical location of aircraft 14, altitude, altitude rate (i.e., vertical speed), angle of attack, angle of attack rate, airspeed, pitch, pitch rate, roll (i.e., bank angle), roll rate, yaw, yaw rate, or other data indicative of flight performance of aircraft 14. Aircraft interface device 12 can compare the received aircraft flight performance data to expected aircraft flight performance data, and can determine that an aircraft anomaly condition is present in response to determining that the aircraft flight performance data exceeds a threshold deviation from the expected aircraft flight performance data. Conversely, aircraft interface device 12 can determine that no aircraft anomaly condition is present in response to determining that the aircraft flight performance data does not exceed the threshold deviation from the expected aircraft flight performance data.

As one example operation, the aircraft flight performance data can include aircraft track information received from, e.g., FMC 28, and indicating a flight direction of aircraft 14 at a current geographical location of aircraft 14. Aircraft interface device 12 can compare the aircraft track information to a route plan of aircraft 14 received from, e.g., FMC 28, and indicating an expected flight direction of aircraft 14 at the current geographical location. Aircraft interface device 12 can determine that an aircraft anomaly condition is present in response to determining that the aircraft track information deviates from the route plan by a threshold distance.

As another example, the aircraft flight performance data can include vertical speed information received from, e.g., aircraft avionics data acquisition system 26. Aircraft interface device 12 can compare the vertical speed of aircraft 14 to a threshold vertical speed, and can determine that the aircraft anomaly condition is present in response to determining that the vertical speed information exceeds the threshold vertical speed. The threshold vertical speed can be, for example, a maximum or minimum vertical speed corresponding to a flight performance envelope of aircraft 14. In other examples, the threshold vertical speed can be a vertical speed specified by a flight plan of the aircraft, such as a VNAV flight profile received from FMC 28.

In certain examples, the aircraft flight performance data can include aircraft angle of attack information received from aircraft avionics data acquisition system 26, flight display control unit 30, an air data computer (ADC) of aircraft 14 (not illustrated), or other system of aircraft 14. Aircraft interface device 12 can compare the angle of attack of aircraft 14 to a threshold angle of attack, and can determine that the aircraft anomaly condition is present in response to determining that the angle of attack exceeds a threshold angle of attack. In certain examples, the threshold angle of attack can correspond to a critical angle of attack associated with a stall angle of aircraft 14 (i.e., at the current flight condition).

The aircraft flight performance data, in some examples, can include aircraft bank angle information received from aircraft avionics data acquisition system 26, FMC 28, an IRS of aircraft 14 (not illustrated), or other system or component. Aircraft interface device 12 can compare the bank angle (i.e., roll angle) of aircraft 14 to a threshold bank angle, and can determine that the aircraft anomaly condition is present in response to determining that the bank angle exceeds a threshold bank angle, such as a threshold bank angle corresponding to a boundary of a performance envelope of aircraft 14.

In some examples, data corresponding to operational characteristics of aircraft 14 can include any data or parameter indicative of a state of aircraft 14. For instance, in addition to aircraft flight performance data, operational characteristics can include data corresponding to cabin pressurization data indicating an air pressure within a cabin of the aircraft, weather radar data, cockpit voice recorder information, cabin and flight deck video data, engine speed (e.g., N1, N2, and N3), engine oil quantity, engine pressure measurements (e.g., EPR), oil temperature, oil pressure, outside air temperature (OAT), flight control positions (e.g., aileron, elevator, spoiler, flap, slat, or other flight control position), ram air turbine (RAT) deployment state (e.g., deployed or stowed), wind speed and/or direction, or any other data corresponding to a state of a component, system, or operational environment of aircraft 14.

As an example, the data corresponding to the operational characteristics of the aircraft can include cabin pressurization data that indicates an air pressure within a cabin of aircraft 14. Aircraft interface device 12 can compare the air pressure within the cabin to a threshold cabin air pressure, and can determine that the aircraft anomaly condition is present in response to determining that the air pressure exceeds a threshold cabin air pressure, such as a maximum or minimum cabin air pressure.

In general, aircraft interface device 12 can determine an aircraft anomaly condition based on a deviation of state information (e.g., with respect to reference state information) corresponding to any flight condition of aircraft 14 or operational state of a component or system of aircraft 14. In this way, aircraft interface device 12 can facilitate both the timely identification of system malfunctions as well as post-flight investigation and root-cause analysis efforts.

Aircraft interface device 12 can store selected data corresponding to the operational characteristics of aircraft 14, such as at non-volatile memory of aircraft interface device 12. Selected data can include one or more portions of the received data corresponding to the operational characteristics of aircraft 14, including, in certain examples, the entirety of the received data. Aircraft interface device 12 can store the selected data at a first frequency during, e.g., non-anomalous flight conditions. A storage frequency can correspond to a plurality of data storage events at regular time intervals, such as every hour, minute, thirty seconds, or other time intervals. In some examples, a storage frequency can correspond to a plurality of data storage events at regular distance intervals, such as every twenty nautical miles, thirty nautical miles, or other distances.

In response to determining that an aircraft anomaly condition is present, aircraft interface device 12 can initiate an increased data storage frequency of the selected data corresponding to the operational characteristics of aircraft 14. For example, in response to determining that an aircraft anomaly condition is present, aircraft interface device 12 can store the selected data at a second storage frequency that is greater than the first storage frequency. For instance, aircraft interface device 12 can store the selected data at a first storage frequency, such as every five minutes, during non-anomalous flight conditions. In response to determining that an aircraft anomaly condition is present, aircraft interface device 12 can store the selected data at a second storage frequency that is greater (i.e., more frequent) than the first storage frequency, such as every second.

Storage of the selected data can include storage within non-volatile memory of aircraft interface device 12. In certain examples, storage of the selected data can include storage within non-volatile memory of aircraft 14 that is remote from aircraft interface device 12. For instance, aircraft interface device 12 can cause the selected data to be stored by transmitting the selected data to FDR 38, e.g., directly or via one or more other systems, such as aircraft avionics data acquisition system 26.

Aircraft interface device 12, in some examples, can cause the selected data to be transmitted to a remote computing device, such as to ground station 24 via SATCOM messages 40 and/or ACARS messages 42. In certain examples, aircraft interface device 12 can initiate an increased rate of data transmission in response to determining that an aircraft anomaly condition is present. For instance, aircraft interface device 12 can cause any one or more of location data, aircraft performance data, maintenance data, or other types of data to be transmitted at a greater (i.e., more frequent) transmission frequency in response to determining that the aircraft anomaly condition is present. In this way, aircraft interface device 12 can cause more location reports including, in certain examples, corresponding aircraft operational data to be transmitted more frequently during aircraft anomaly conditions.

The storage and transmission frequencies can be the same or different frequencies. In addition, the storage and/or transmission frequencies of selected data can be pre-determined frequencies or frequencies determined by aircraft interface device 12. For instance, in some examples, aircraft interface device 12 can store and/or transmit the selected data at a first, pre-determined frequency during non-anomalous flight conditions, such as every fifty nautical miles. Aircraft interface device 12 can store and/or transmit the selected data at a second, pre-determined frequency during anomalous flight conditions, such as every nautical mile. In other examples, aircraft interface device 12 can determine one or more of the first and second storage (or transmission) frequencies based on, e.g., a categorization of a determined anomaly condition. For example, aircraft interface device 12 can determine a severity of an identified anomaly condition by comparing the identified anomaly condition to a ranked index of anomaly conditions. Aircraft interface device 12 can determine a lower storage and/or transmission frequency during anomalies having a lesser rank (i.e., corresponding to a less severe categorization of the anomaly), and can determine a higher storage and/or transmission frequency during anomalies having a greater rank (i.e., corresponding to a more sever categorization of the anomaly). In this way, aircraft interface device 12 can more frequently store data and/or transmit position reports during more severe anomalies, thereby providing greater insight into a root-cause of an anomaly condition and/or greater precision of location tracking of aircraft 14.

As illustrated in FIG. 1, aircraft interface device 12 can cause the selected data to be transmitted to ground server 20 via SATCOM messages 40 and/or ACARS messages 42. Ground server 20 can transmit one or more portions of the selected data to web server 22 via, e.g., a wide area network (WAN) such as the Internet. Web server 22 can provide (e.g., serve) the data to ground station 24 via a local area network (LAN), a WAN, a cellular network, or other communications network. Ground station 24, in some examples, is utilized by ground crews for location tracking and/or communications with aircraft 14. That is, as illustrated in FIG. 1 by the two-way arrows connecting components of data acquisition system 10, data (e.g., messages) can be transmitted from ground station 24 to aircraft 14 via web server 22, ground server 20, and SATCOM network 16 and/or radio communications network 18.

In certain examples, an aircraft anomaly condition can include a deviation from expected parameters of a flight plan, such as a deviation from an expected amount of fuel upon arrival at a waypoint of an expected flight plan, a deviation from an expected time of arrival at a waypoint of the expected flight plan, or other such deviations. In such examples, aircraft interface device 12 can output suggested changes in a commanded flight condition of aircraft 14 to address the determined flight plan deviation. For instance, aircraft interface device 12 can retrieve wind speed and/or weather radar data from, e.g., FMC 28, aircraft avionics data acquisition system 26, or other system of aircraft 14, and can determine that the wind speed, wind direction, or indicated weather conditions deviate from expected parameters included in the flight plan. In such an example, aircraft interface device 12 can output a suggested change in a commanded flight condition, such as a change in altitude, heading, course, or other flight condition that may decrease the magnitude of the deviation. For instance, aircraft interface device 12 can determine that an expected wind direction according to the flight plan (and predicted weather data) corresponds to a tail wind, but that current wind direction indicates a headwind. In such an example, aircraft interface device 12 may determine that received weather data indicates a tail wind at a different altitude, and can output a suggested change in the commanded altitude to the altitude corresponding to the tail wind. In this way, aircraft interface device 12 can help to improve performance (e.g., fuel efficiency, time of arrival, or other performance metrics) of aircraft 14 during flight.

As described herein, aircraft interface device 12 can detect anomalous flight conditions, and can automatically initiate a higher frequency of aircraft operational data storage during such anomalies. In this way, aircraft interface device 12 can facilitate maintenance activities and/or root-cause analyses associated with the anomalous flight conditions without overburdening processing bandwidth and/or data storage capabilities during non-anomalous conditions. Moreover, aircraft interface device 12 can initiate a higher frequency of data (e.g., location data) transmission during anomalous flight conditions, thereby helping to decrease a distance between location reports during such anomalies without increasing the rate of transmission and associated cost during non-anomalous flight.

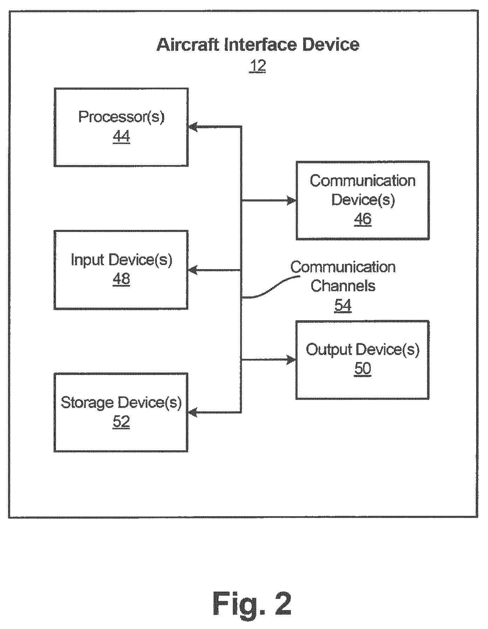

FIG. 2 is a block diagram illustrating one example of aircraft interface device 12 that can determine whether an aircraft anomaly condition is present. As illustrated in FIG. 2, aircraft interface device 12 can include one or more processors 44, one or more communications devices 46, one or more input devices 48, one or more output devices 50, and one or more storage devices 52. Each of components 44, 46, 48, 50, and 52 can be interconnected (physically, communicatively, electrically, and/or operatively) for inter-component communications. For instance, as illustrated in FIG. 2, each of components 44, 46, 48, 50, and 52 can be coupled by one or more communication channels 54.

Processors 44, in one example, are configured to implement functionality and/or process instructions for execution within aircraft interface device 12. For instance, processors 44 can be capable of processing instructions stored in storage device 52. Examples of processors 44 can include any one or more of a microprocessor, a controller, a digital signal processor (DSP), an application specific integrated circuit (ASIC), a field-programmable gate array (FPGA), or other equivalent discrete or integrated logic circuitry.

One or more storage devices 52 can be configured to store information within aircraft interface device 12 during operation. Storage device 52, in some examples, is described as a computer-readable storage medium. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). In some examples, storage device 52 is a temporary memory, meaning that a primary purpose of storage device 52 is not long-term storage. Storage device 52, in some examples, is described as a volatile memory, meaning that storage device 52 does not maintain stored contents when power to aircraft interface device 12 is turned off. Examples of volatile memories can include random access memories (RAM), dynamic random access memories (DRAM), static random access memories (SRAM), and other forms of volatile memories. In some examples, storage device 52 is used to store program instructions for execution by processors 44. Storage device 52, in one example, is used by software or applications running on aircraft interface device 12 to temporarily store information during program execution.

Storage device 52, in some examples, also includes one or more computer-readable storage media. Storage device 52 can be configured to store larger amounts of information than volatile memory. Storage device 52 can further be configured for long-term storage of information. In some examples, storage device 52 includes non-volatile storage elements. Examples of such non-volatile storage elements can include magnetic hard discs, optical discs, floppy discs, flash memories, or forms of electrically programmable memories (EPROM) or electrically erasable and programmable (EEPROM) memories.

As illustrated in FIG. 2, aircraft interface device 12 also includes one or more communication devices 46. Aircraft interface device 12, in one example, utilizes communication device 46 to communicate with external devices via one or more networks, such as one or more wireless networks. Communication device 46 can be a network interface card, such as an Ethernet card, an optical transceiver, a radio frequency transceiver, or any other type of device that can send and receive information. Other examples of such network interfaces can include Bluetooth, 3G, 4G, and WiFi radio computing devices as well as Universal Serial Bus (USB). In some examples, aircraft interface device 12 utilizes communication device 46 to wirelessly communicate with an external device.

One or more input devices 48, in some examples, are configured to receive input from a user. Examples of input devices 48 can include a mouse, a keyboard, a microphone, a camera device, a presence-sensitive and/or touch-sensitive display, or other type of device configured to receive input from a user.

One or more output devices 50 can be configured to provide output to a user. Examples of output device 50 can include a display device, a sound card, a video graphics card, a cathode ray tube (CRT) monitor, a liquid crystal display (LCD), or other type of device for outputting information in a form understandable to users or machines.

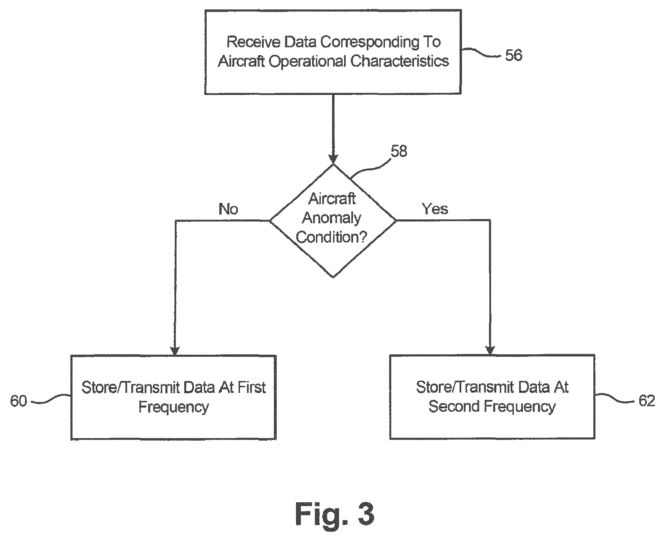

FIG. 3 is a flow diagram illustrating example operations to store aircraft operational data at a frequency corresponding to the presence of a determined aircraft anomaly condition. For purposes of clarity and ease of discussion, the example operations are described below within the context of data acquisition system 10 and aircraft interface device 12 of FIGS. 1 and 2.

Data corresponding to aircraft operational characteristics can be received (step 56). For instance, aircraft interface device 12 can receive flight performance data, aircraft state information, or other data corresponding to operational characteristics of aircraft 14 from any one or more components or systems of aircraft 14, such as aircraft avionics data acquisition system 26, FMC 28, FDCU 30, CMC 32, CVR 34, cabin flight deck cameras 36, and FDR 38.

It can be determined whether the data corresponding to the operational characteristics of the aircraft indicates that an aircraft anomaly condition is present (step 58). As an example, aircraft interface device 12 can determine, based on the received data from the one or more components or systems of aircraft 14, whether the received data satisfies threshold anomaly criteria corresponding to a deviation from expected operational data.

In examples where no aircraft anomaly condition is present ("No" branch of step 58), selected data corresponding to the operational characteristics of the aircraft can be stored at a first storage frequency (step 60). In addition and/or alternatively, selected data corresponding to the operational characteristics of the aircraft, such as aircraft location data, can be transmitted at a first transmission frequency. The first storage frequency and first transmission frequency can be the same or different frequencies.

In examples where an aircraft anomaly condition is present ("YES" branch of step 58), selected data corresponding to the operational characteristics of the aircraft can be stored at a second storage frequency and/or transmitted at a second transmission frequency (step 62). The second storage frequency and the second transmission frequency can be the same or different frequencies. The second storage frequency can be greater (i.e., more frequent) than the first storage frequency. The second transmission frequency can be greater (i.e., more frequent) than the first transmission frequency.

The example operations can be iterative in nature, meaning that aircraft interface device 12 can continue to receive data corresponding to operational characteristics of aircraft 14 and determine whether the data indicates that the aircraft anomaly condition is present. In some examples, aircraft interface device 12 can continue to store and/or transmit the selected data at the second (i.e., increased) frequencies until the aircraft anomaly condition is not present, or for a threshold amount of time (e.g., a threshold number of seconds, minutes, or hours) after the aircraft anomaly condition is not present.

As such, an aircraft interface device implementing techniques described herein can help to reduce the distance and/or time between aircraft location reports during anomalous flight conditions, thereby helping to reduce a sized of a potential search area in the event that the aircraft is lost. Moreover, the aircraft interface device can facilitate failure root-cause analysis of components of the aircraft through automated recording and/or communication of data relevant to an anomaly event at an increased rate during the anomaly. As such, techniques of this disclosure can facilitate maintenance and investigation efforts, as well as provide improved aircraft location reporting without increasing the cost associated with data transmission during non-anomalous flight conditions.

The following are non-exclusive descriptions of possible embodiments of the present invention.

In one embodiment, a method includes receiving, by an aircraft interface device installed on an aircraft, data corresponding to operational characteristics of the aircraft, and determining, by the aircraft interface device, whether the data corresponding to the operational characteristics of the aircraft indicates that an aircraft anomaly condition is present. The method further includes storing, by the aircraft interface device, selected data corresponding to the operational characteristics of the aircraft at a first storage frequency in response to determining that the aircraft anomaly condition is not present, and storing, by the aircraft interface device, the selected data corresponding to the operational characteristics of the aircraft at a second storage frequency that is greater than the first storage frequency in response to determining that the aircraft anomaly condition is present.

The method of the preceding paragraph can optionally include, additionally and/or alternatively, any one or more of the following features, configurations, operations, and/or additional components:

The data corresponding to the operational characteristics of the aircraft can include aircraft flight performance data. Determining whether the data corresponding to the operational characteristics of the aircraft indicates that the aircraft anomaly condition is present can include comparing the aircraft flight performance data to expected aircraft flight performance data, determining that the data corresponding to the operational characteristics of the aircraft indicates that the aircraft anomaly condition is present in response to determining that the aircraft flight performance data exceeds a threshold deviation from the expected aircraft flight performance data, and determining that the data corresponding to the operational characteristics of the aircraft indicates that the aircraft anomaly condition is not present in response to determining that the aircraft flight performance data does not exceed the threshold deviation from the expected aircraft flight performance data.

The aircraft flight performance data can include aircraft track information indicating a flight direction of the aircraft at a current geographical location of the aircraft. Comparing the aircraft flight performance data to the expected aircraft flight performance data can include comparing the aircraft track information to a route plan of the aircraft indicating an expected flight direction of the aircraft at the current geographical location of the aircraft.

The aircraft flight performance data can include aircraft vertical speed information. Comparing the aircraft flight performance data to the expected aircraft flight performance data can include comparing the aircraft vertical speed information to a threshold vertical speed.

The threshold vertical speed can correspond to an expected vertical speed of the aircraft corresponding to a flight plan of the aircraft.

The aircraft flight performance data can include aircraft angle of attack information. Comparing the aircraft flight performance data to the expected aircraft flight performance data can include comparing the aircraft angle of attack information to a threshold angle of attack.

The threshold angle of attack can correspond to a critical angle of attack associated with a stall angle of the aircraft.

The aircraft flight performance data can include aircraft bank angle information. Comparing the aircraft flight performance data to the expected aircraft flight performance data can include comparing the aircraft bank angle information to a threshold bank angle.

The data corresponding to the operational characteristics of the aircraft can include cabin pressurization data that indicates an air pressure within a cabin of the aircraft. Determining whether the data corresponding to the operational characteristics of the aircraft indicates that the aircraft anomaly condition is present can include comparing the air pressure within the cabin of the aircraft to a threshold cabin air pressure.

Storing the selected data corresponding to the operational characteristics of the aircraft can include storing the selected data corresponding to the operational characteristics of the aircraft at non-volatile computer-readable memory of the aircraft interface device.

Storing the selected data corresponding to the operational characteristics of the aircraft can include transmitting the selected data corresponding to the operational characteristics of the aircraft to a flight data recorder device that is installed on the aircraft and is configured to store the selected data.

The selected data corresponding to the operational characteristics of the aircraft can include location data indicating a current geographical location of the aircraft.

The method can further include transmitting, by the aircraft interface device, the selected data corresponding to the operational characteristics of the aircraft to a remote computing device via a communications network.

In another embodiment, an aircraft interface device configured to be installed on an aircraft can include at least one processor, a communications unit, and computer-readable memory. The communications unit can be operatively coupled to the at least one processor and configured to receive data corresponding to operational characteristics of the aircraft. The computer-readable memory can be encoded with instructions that, when executed by the at least one processor, cause the aircraft interface device to determine whether the data corresponding to the operational characteristics of the aircraft indicates that an aircraft anomaly condition is present. The computer-readable memory can be further encoded with instructions that, when executed by the at least one processor, cause the aircraft interface device to store selected data corresponding to the operational characteristics of the aircraft at a first storage frequency in response to determining that the aircraft anomaly condition is not present, and store the selected data corresponding to the operational characteristics of the aircraft at a second storage frequency that is greater than the first storage frequency in response to determining that the aircraft anomaly condition is present.

The data corresponding to the operational characteristics of the aircraft can include aircraft flight performance data. The instructions to determine whether the data corresponding to the operational characteristics of the aircraft indicates that the aircraft anomaly condition is present can include instructions that, when executed by the at least one processor, cause the aircraft interface device to compare the aircraft flight performance data to expected aircraft flight performance data, determine that the data corresponding to the operational characteristics of the aircraft indicates that the aircraft anomaly condition is present in response to determining that the aircraft flight performance data exceeds a threshold deviation from the expected aircraft flight performance data, and determine that the data corresponding to the operational characteristics of the aircraft indicates that the aircraft anomaly condition is not present in response to determining that the aircraft flight performance data does not exceed the threshold deviation from the expected aircraft flight performance data.

The aircraft flight performance data can include aircraft track information indicating a flight direction of the aircraft at a current geographical location of the aircraft. The instructions to compare the aircraft flight performance data to the expected aircraft flight performance data can include instructions that, when executed by the at least one processor, cause the aircraft interface device to compare the aircraft track information to a route plan of the aircraft indicating an expected flight direction of the aircraft at the current geographical location of the aircraft.

The aircraft flight performance data can include aircraft vertical speed information. The instructions to compare the aircraft flight performance data to the expected aircraft flight performance data can include instructions that, when executed by the at least one processor, cause the aircraft interface device to compare the aircraft vertical speed to a threshold vertical speed.

The instructions to store the selected data corresponding to the operational characteristics of the aircraft can include instructions that, when executed by the at least one processor, cause the aircraft interface device to transmit the selected data to a flight data recorder device that is installed on the aircraft and is configured to store the selected data.

The selected data corresponding to the operational characteristics of the aircraft can include location data indicating a current geographical location of the aircraft.

The communications unit can be further configured to transmit data. The computer-readable memory can be further encoded with instructions that, when executed by the at least one processor, cause the aircraft interface device to transmit, via the communications unit, the selected data corresponding to the operational characteristics over a communications network.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method comprising:
receiving, by an aircraft interface device (12) installed on an aircraft (14), data corresponding to operational characteristics of the aircraft;
determining, by the aircraft interface device (12), whether the data corresponding to the operational characteristics of the aircraft (14) indicates that an aircraft anomaly condition is present;
storing, by the aircraft interface device (12), selected data corresponding to the operational characteristics of the aircraft (14) at a first storage frequency in response to determining that the aircraft anomaly condition is not present; and
storing, by the aircraft interface device (12), the selected data corresponding to the operational characteristics of the aircraft (14) at a second storage frequency that is greater than the first storage frequency in response to determining that the aircraft anomaly condition is present.

2. The method of claim 1,
wherein the data corresponding to the operational characteristics of the aircraft (14) comprises aircraft flight performance data; and
wherein determining whether the data corresponding to the operational characteristics of the aircraft (14) indicates that the aircraft anomaly condition is present comprises:
comparing the aircraft flight performance data to expected aircraft flight performance data;
determining that the data corresponding to the operational characteristics of the aircraft (14) indicates that the aircraft anomaly condition is present in response to determining that the aircraft flight performance data exceeds a threshold deviation from the expected aircraft flight performance data; and
determining that the data corresponding to the operational characteristics of the aircraft (14) indicates that the aircraft anomaly condition is not present in response to determining that the aircraft flight performance data does not exceed the threshold deviation from the expected aircraft flight performance data.

3. The method of claim 2,
wherein the aircraft flight performance data comprises aircraft track information indicating a flight direction of the aircraft (14) at a current geographical location of the aircraft; and
wherein comparing the aircraft flight performance data to the expected aircraft flight performance data comprises comparing the aircraft track information to a route plan of the aircraft indicating an expected flight direction of the aircraft (14) at the current geographical location of the aircraft.

4. The method of claim 2,
wherein the aircraft flight performance data comprises aircraft vertical speed information; and
wherein comparing the aircraft flight performance data to the expected aircraft flight performance data comprises comparing the aircraft vertical speed information to a threshold vertical speed.

5. The method of claim 4, wherein the threshold vertical speed corresponds to an expected vertical speed of the aircraft corresponding to a flight plan of the aircraft (14).

6. The method of claim 2,
wherein the aircraft flight performance data comprises aircraft angle of attack information; and
wherein comparing the aircraft flight performance data to the expected aircraft flight performance data comprises comparing the aircraft angle of attack information to a threshold angle of attack.

7. The method of claim 6, wherein the threshold angle of attack corresponds to a critical angle of attack associated with a stall angle of the aircraft (14).

8. The method of claim 2,
wherein the aircraft flight performance data comprises aircraft bank angle information; and
wherein comparing the aircraft flight performance data to the expected aircraft flight performance data comprises comparing the aircraft bank angle information to a threshold bank angle.

9. The method of any preceding claim,
wherein the data corresponding to the operational characteristics of the aircraft (14) comprises cabin pressurization data that indicates an air pressure within a cabin of the aircraft (14); and
wherein determining whether the data corresponding to the operational characteristics of the aircraft (14) indicates that the aircraft anomaly condition is present comprises comparing the air pressure within the cabin of the aircraft to a threshold cabin air pressure.

10. The method of any preceding claim, wherein storing the selected data corresponding to the operational characteristics of the aircraft (14) comprises storing the selected data corresponding to the operational characteristics of the aircraft at non-volatile computer-readable memory of the aircraft interface device (12).

11. The method of any preceding claim, wherein storing the selected data corresponding to the operational characteristics of the aircraft (14) comprises transmitting the selected data corresponding to the operational characteristics of the aircraft (14) to a flight data recorder device that is installed on the aircraft (14) and is configured to store the selected data.

12. The method of any preceding claim, wherein the selected data corresponding to the operational characteristics of the aircraft comprises location data indicating a current geographical location of the aircraft (14).

13. The method of any preceding claim, further comprising:
transmitting, by the aircraft interface device (12), the selected data corresponding to the operational characteristics of the aircraft (14) to a remote computing device via a communications network.

14. An aircraft interface device (12) configured to be installed on an aircraft (14), the aircraft interface device (12) comprising:
at least one processor;
a communications unit operatively coupled to the at least one processor and configured to receive data corresponding to operational characteristics of the aircraft; and
computer-readable memory (52) encoded with instructions that, when executed by the at least one processor, cause the aircraft interface device (12) to:
determine whether the data corresponding to the operational characteristics of the aircraft indicates that an aircraft anomaly condition is present;
store selected data corresponding to the operational characteristics of the aircraft at a first storage frequency in response to determining that the aircraft anomaly condition is not present; and
store the selected data corresponding to the operational characteristics of the aircraft at a second storage frequency that is greater than the first storage frequency in response to determining that the aircraft anomaly condition is present.

15. The aircraft interface device of claim 14,
wherein the data corresponding to the operational characteristics of the aircraft (14) comprises aircraft flight performance data; and
wherein the instructions to determine whether the data corresponding to the operational characteristics of the aircraft indicates that the aircraft anomaly condition is present comprise instructions that, when executed by the at least one processor, cause the aircraft interface device to:
compare the aircraft flight performance data to expected aircraft flight performance data;
determine that the data corresponding to the operational characteristics of the aircraft indicates that the aircraft anomaly condition is present in response to determining that the aircraft flight performance data exceeds a threshold deviation from the expected aircraft flight performance data; and
determine that the data corresponding to the operational characteristics of the aircraft (14) indicates that the aircraft anomaly condition is not present in response to determining that the aircraft flight performance data does not exceed the threshold deviation from the expected aircraft flight performance data.
